# EUROPÄISCHE PATENTSCHRIFT

(11) **EP 0 495 771 B1**
(45) Veröffentlichungstag und Bekanntmachung des Hinweises auf die Patenterteilung: **02.01.1997**
(21) Anmeldenummer: 92890012.5
(22) Anmeldetag: 15.01.1992
(51) Int. Cl.: H02H 3/33

(54) **Fehlerstromschutzschalter**
Fault-current protective switch
Disjoncteur différentiel

(30) Priorität: 16.01.1991 AT 80/91; 04.02.1991 AT 232/91; 29.05.1991 AT 1090/91
(43) Veröffentlichungstag der Anmeldung: 22.07.1992
(73) Patentinhaber: FELTEN & GUILLEAUME AUSTRIA AG, 3943 Schrems-Eugenia 1 (AT)
(72) Erfinder: Biegelmeier, Gottfried, Prof.Ing.Dr.Phil., A-1195 Wien (AT)
(74) Vertreter: Beer, Manfred, Dipl.-Ing.

(56) Entgegenhaltungen:
- EP-A- 0 285 594
- DE-A- 3 707 307
- FR-A- 1 508 704
- IEEE TRANSACTIONS ON INDUSTRY AND GENERAL APPLICATIONS Bd. IGA-3, Nr. 3, Mai 1967, New York US, Seiten 217-226; R.R. CONRAD : 'A new ground fault protective system for electrical distribution circuits'
- BULLETIN SCIENTIFIQUE DE L'ASSOCIATION DES INGENIEURS ELECTRICIENS SORTIS DE L'INSTITUT ELECTROTECHNIQUE MONTEFIORE Bd. 82, Nr. 3, September 1969, Liège, Seiten 127-138; H. LOHEST : 'Technologie des disjoncteurs de terre à relais de courant'

## Beschreibung

Die Erfindung betrifft einen Fehlerstromschutzschalter (in der Folge kurz FI-Schalter genannt). Ein solcher Fehlerstromschutzschalter bestehend aus einem Gehäuse mit Anschlußklemmen für Netzleitungen, in dem ein Kontaktapparat mit zugehörigem Schaltschloß, eine Prüfeinrichtung, ein Betätigungsorgan, ein elektromagnetischer Arbeitsstromauslöser für das Schaltschloß (Schloßauslöser), ein Summenstromwandler, eine elektronische Energiespeicherschaltung und ein elektronisches oder elektromechanisches Relais mit dazugehörigem Schließkontakt (Wandlerrelais) untergebracht sind, wobei die Sekundärwicklung des Summenstromwandlers ohne galvanische Verbindung mit den Netz leitungen die netzspannungsunabhängige elektronische Energiespeicherschaltung anspeist und beim Überschreiten eines bestimmten Grenzwertes des Auslösefehlerstromes die Energiespeicherschaltung des Wandlerrelais betätigt, ist aus der EP-A-0 285 594 bekannt.

Aus der EP-A-0 108 726 ist ein Fehlerstromschutzschalter bekannt, der aus einem Gehäuse mit Anschlußklemmen für Netz leitungen besteht, in dem ein Kontaktapparat mit zugehörigem Schaltschloß, ein Betätigungsorgan, ein elektromagnetischer Arbeitsstromauslöser für das Schaltschloß, ein Summenstromwandler und ein Thyristor mit einer Thyristorschaltstrecke untergebracht sind, wobei die Sekundärwicklung des Summenstromwandlers im Fehlerstromfall unabhängig von der Netzspannung den Kondensator einer Zeitverzögerungschaltung auflädt und beim Überschreiten des Auslösefehlerstromes der Thyristor durchzündet, wobei durch das Schließen der Thyristor schaltstrecke der Schloßauslöser netzspannungsabhängig das Schaltschloß betätigt, wodurch der

Fehlerstromschutzschalter ausschaltet und danach der Thyristor in seinen nichtleitenden Zustand zurückkehrt.

Den Anstoß zur Erfindung gibt die Notwendigkeit, die Zuverlässigkeit der heute auf dem Markt befindlichen FI-Schalter zu erhöhen, um ihre Auslösung ebenso zuverlässig zu machen, wie die von Leitungsschutzschaltern (LS-Schaltern).

In den letzten Jahren haben eine Reihe von Anlagenüberprüfungen gezeigt, daß FI-Schalter derzeit bei weitem nicht den Anforderungen genügen, die an die Zuverlässigkeit der Ausschaltung im Fehlerfall bei einem Schutzapparat gestellt werden müssen. (Biegelmeier, G. und Kieback, Dr.: Das Problem der Zuverlässigkeit bei der Fehlerstromschutzschaltung, Bulletin der Internationalen Sektion der IVSS für die Verhütung von Arbeitsunfällen und Berufskrankheiten durch die Elektrizität, Heft 11, 1990).

Man muß heute bei der Überprüfung der Funktionsfähigkeit von FI-Schaltern bei einer Einbaudauer bis zu zehn Jahren mit einem mittleren Ausfall von einigen Prozent rechnen, wobei eine nähere Aufgliederung zeigt, daß bei einer Einbaudauer von zehn Jahren oder länger sogar 10% der Schalter nicht funktionieren. Da FI-Schalter mit steigender Tendenz in Millionenstückzahlen pro Jahr installiert werden, handelt es sich um ein Problem, das gelöst werden muß.

Die Ursachen der Ausfälle von FI-Schaltern liegen im Konstruktionsprinzip der heute auf dem Markt befindlichen FI-Schalter. Sie verwenden einerseits immer hochempfindlichere Permanentmagnetauslöser, um beim Material für die Summenstromwandler zu sparen (z.B. EP-A-228 345, 351 674 und 293 702), anderseits elektronische Schaltungen mit zahlreichen Bauelementen, die ständig an Netzspannung liegen und damit nur eine begrenzte Lebensdauer haben (z.B. EP-A-252 693, 152 043). Sie sind nicht nur Überspannungen ausgesetzt, sondern verbrauchen auch elektrische Energie, da die Leistung derartiger FI-Baugruppen etwa bei einem Watt liegt (Solleder, R.: Warum Fehlerstromschutzschalter mit netzspannungsunabhängiger Auslösung? etz Bd. 107 (1986), H. 20, S. 938-945).

Netzspannungsunabhängige Energiespeicherschaltungen können zwar unempfindlichere Permanentmagnetauslöser betätigen, erfordern aber hochgezüchtete und störanfällige Schaltschlösser. Diese Lösung ist seit langem bekannt (AT-PS 197 468). Etwas abgeändert ist sie in der DE-B-25 40 815 und CH-A-656 262 beschrieben.

Das Konstruktionsprinzip, bei dem für die Auslösung der FI-Schalter Permanentmagnetauslöser verwendet werden, führt mit der heutigen Tendenz immer höhermpfindliche Auslöser zu entwickeln, in eine Sackgasse. Die Schliffflächen zwischen Auslöseanker und Joch müssen immer genauer bearbeitet werden und neigen dann zu Hafterscheinungen, deren Ursachen noch nicht geklärt sind und in mikrokristallinen Brückenbildungen liegen dürften. Hochentwickelte Reinigungsverfahren in Reinsträumen verbessern zwar die Zuverlässigkeit, bringen aber keine wirkliche Abhilfe.

Es besteht auch die Möglichkeit, einen Arbeitsstromauslöser anstelle eines Permanentmagnetauslösers zu verwenden.

Derartige Auslöser werden für die elektromagnetische Schnellauslösung von Leitungsschutzschaltern (LS-Schaltern) seit langem mit Erfolg eingesetzt. Allerdings reicht die Leistung des Summenstromwandlers auch bei Einsatz von Speicherschaltungen nicht aus, einen Arbeitsstromauslöser zu betätigen. Deshalb wurden bisher netzspannungsabhängige, elektronische Verstärkerschaltungen angewendet, deren Eingang mit der Sekundärwicklung des Summenstromwandlers verbunden wird und die beim Fließen von Fehlerströmen entsprechender Stärke meist über Thyristorschaltungen mit Hilfe der Netzspannung den Arbeitsstromauslöser betätigen (siehe z.B. AT-B-378 444). Diese Lösung hat aber infolge der dauernd an Netzspannung liegenden elektronischen Bauelemente die weiter oben genannten Nachteile in bezug auf die Zuverlässigkeit der Auslösung nach längerer Einbaudauer.

Die Lösung der oben beschriebenen Aufgabe erfolgt erfindungsgemäß durch die Merkmale des Anspruchs 1.

Mit der Erfindung wird eine Lösung des Problems dadurch geboten, daß anstelle der unzuverlässigen netzspannungsabhängigen Elektronik die Sekundärwicklung des Summenstromwandlers mit einer netzspannungsunabhängigen Energiespeicherschaltung verbunden wird. Bei entsprechender Höhe des Fehlerstromes in der Primärwicklung des Summenstromwandlers wird die Energiespeicherschaltung zeitabhängig aufgeladen und gibt nach Erreichen der Schwellenspannung eines spannungsabhängigen, elektronischen Schaltbausteines einen Schaltimpuls auf ein Relais (in der Folge Wandlerrelais genannt). Dadurch wird im Wandlerrelais ein Kontakt geschlossen, wodurch ein elektromagnetischer Arbeitsstromauslöser mit hoher Auslösekraft für die Auslösung des Schaltschlosses (in der Folge kurz Schloßauslöser genannt) vom Netz den notwendigen Erregerstrom erhält und der FI-Schalter ausschaltet.

In bekannter Weise kann der Stromkreis für das Schloßrelais und der Prüfstromkreis durch einen Unterbrecherkontakt im Kontaktapparat vom Außenleiter getrennt werden. Das Wandlerrelais kann entweder monostabil oder bistabil ausgeführt sein.

Bei einem solchen elektromechanischen, monostabilen Wandlerrelais wird erfindungsgemäß der Relaiskontakt durch den von der Energiespeicherschaltung kommenden Auslöseimpuls kurzzeitig geschlossen, wobei die elektrischen Daten der Energiespeicherschaltung und der Wicklung des Wandlerrelais so aufeinander abgestimmt sind, daß der Auslöseimpuls und damit die Einschaltdauer des Relaiskontaktes lang genug sind, um den Schloßauslöser sicher zu betätigen. Nach diesem Vorgang kehrt das monostabile Wandlerrelais selbsttätig in seine Ausgangsstellung zurück.

Dies erfordert jedoch in der Energiespeicherschaltung einen großen Kondensator und damit relativ lange Aufladezeiten, die für FI-Schalter für den Zusatzschutz mit einem Nennfehlerstrom von 30 mA Schwierigkeiten verursachen können.

In einer Ausführungsform der Erfindung wird daher das monostabile Wandlerrelais durch einen elektrischen Stromkreis in der Einstellung des Schließkontaktes so lange gehalten, bis der Schloßauslöser das Schaltschloß betätigt hat und damit der FI-Schalter ausschaltet. Der Haltestromkreis liegt verbraucherseitig an Netzspannung, oder wird in der üblichen Weise an den Hilfskontakt angeschlossen, der auch die Prüfeinrichtung mit Strom versorgt. Seine Haltewirkung beginnt, wenn der Schließkontakt des Wandlerrelais, das ebenso wie die Relaiswicklung im Haltestromkreis liegt, geschlossen wird. Damit wird sichergestellt, daß die Schließzeit des Relaiskontaktes lang genug ist, um den Schloßauslöser zu betätigen.

Eine weitere Ausführungsfomr des erfindungsgemäßen FI-Schalters ergibt sich, wenn als Wandlerrelais kein elektromechanisches Relais sondern ein elektronisches Relais verwendet wird.

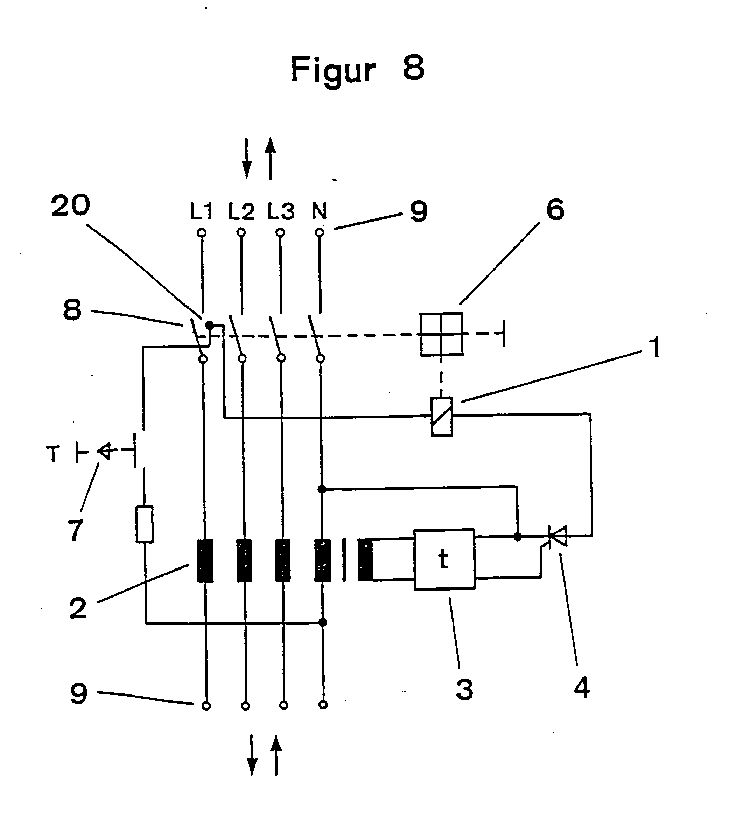

Ein derartiges, elektronisches Relais kann z.B. eine Thyristorschaltung sein, die durch den Impuls der netzspannungsunabhängigen Energiespeicherschaltung leitend wird (Schließkontakt). Dann kann zwar bei einem Halbleiter im Fehlerfall eine Unterbrechung auftreten, aber unter den gegebenen Betriebsbedingungen ist dies äußerst unwahrscheinlich, so daß die Ausfallrate der Thyristorschaltung mindestens um eine Zehnerpotenz geringer ist, als wenn eine netzspannungsabhängige Elektronikschaltung für die Erfassung des Fehlerstromsignals verwendet wird (Figur 8).

Die Schaltungen mit elektronischen Relais sind also weniger zuverlässig als die erfindungsgemäßen Ausführungen mit mechanischen Relais, aber immer noch um mindestens eine Zehnerpotenz zuverlässiger als die derzeit verwendeten Konstruktionen von FI-Schaltern mit Permanentmagnetauslösern oder netzspannungsabhängigen Verstärkerschaltungen.

Wird ein bistabiles Wandlerrelais verwendet, so muß das Wandlerrelais nach dem Impuls und den dadurch eingeleiteten Schaltvorgang in seine Ausgangslage rückgestellt werden. Dies kann erfindungsgemäß elektrisch oder mechanisch erfolgen, wodurch der Relaiskontakt wieder geöffnet wird.

Die mechanische Rückstellung erfolgt erfindungsgemäß, indem, ähnlich Permanentmagnet-Auslösern der klassischen FI-Schalterkonstruktionen, bei der Ausschaltbewegung des Schaltschlosses durch eine mechanische Kopplung das bistabile Wandlerrelais in seine Ausgangslage gebracht wird.

Die elektrische Rückstellung kann erfindungsgemäß durch eine zusätzliche Betätigungsspule des Wandlerrelais erfolgen, die durch das Schließen des Relaiskontaktes den Erregerstrom vom Netz erhält.

Diese Spule ist dabei erfindungsgemäß über eine geeignete Zeitverzögerungsschaltung mit den Netzleitungen netzseitig verbunden. Dies bedingt, daß beim Anschluß des FI-Schalters Netz- und Verbraucherseite beachtet werden müssen.

Die elektrische Rückstellung kann erfindungsgemäß aber auch mit der Betätigungsspule des Wandlerrelais erfolgen, die mit der Energiespeicherschaltung für die Fehlerstromauslösung verbunden ist. Der Auslösekreis ist ja von den Netzleitungen galvanisch getrennt, womit die Spule erfindungsgemäß an einen zweiten Stromkreis angeschlossen werden kann, der mit den Netzleitungen verbunden ist. Dieser Stromkreis enthält eine geeignete Zeitverzögerungsschaltung und den Kontakt des Wandlerrelais.

Daß die erfindungsgemäßen Ausführungen dieser FI-Schalter eine Auslösezuverlässigkeit haben, die um Größenordnungen höher ist als die derzeit auf dem Markt befindlichen Konstruktionen, ist leicht zu verstehen. Sowohl der Schloßauslöser als auch das Wandlerrelais haben bei den geringen Schalthäufigkeiten eines FI-Schalters eine sehr hohe Lebensdauer. Der Schloßauslöser kann ja so robust wie die üblichen Auslöser von Leitungsschutzschaltern gebaut werden und auch das Schaltschloß der erfindungsgemäßen FI-Schalter kann dem eines Leitungsschutzschalters prinzipiell entsprechen. Das Wandlerrelais kann bei elektrischer Rückstellung vollkommen hermetisch geschlossen sein, aber auch bei mechanischer Rückstellung entfallen die Klebeerscheinungen der bisher üblichen Permanentmagnetauslöser.

Auch die elektronischen Bauelemente der netzspannungsunabhängigen Energiespeicherschaltung haben eine sehr hohe Lebensdauer. Diese Bauelemente befinden sich ja, wenn kein Fehlerstrom fließt, d.h. die meiste Zeit in einem spannungslosen Betriebszustand. Dementsprechend hoch sind ihre Zuverlässigkeitskennzahlen.

Damit ist mit den erfindungsgemäßen FI-Schaltern das Ziel erreicht, eine Zuverlässigkeit der Auslösung in der gleichen Größenordnung zu erreichen, wie sie bei den Leitungsschutzschaltern üblich ist. Der alte Einwand, daß die Auslösung von der Netzspannung abhängt, ist ebensowenig stichhaltig wie die alten Vorhalte, daß die Nullung wegen der Nulleiterunterbrechungen nicht zuverlässig ist.

Letzten Endes sind netzspannungsabhängige FI-Schalter schon heute in den meisten Ländern, zumindest für den Zusatzschutz zugelassen, obwohl sie mit einer Elektronik arbeiten, die dauernd an der vollen Netzspannung liegt und dadurch nur eine begrenzte Lebensdauer hat.

Bei allen erfindungsgemäßen Lösungsvorschlägen können im Wandler-Stromkreis und im Stromkreis des Schloßauslösers in bekannter Weise Überspannungsschutzelemente, wie Dioden oder Varistoren eingebaut werden.

Die Erfindung betrifft weiters eine Ausführungsform des erfindungsgemäßen FI-Schalters, die eine besonders wirtschaftliche Lösung für seinen Überlast- und Kurzschlußschutz, zusammen mit einer Vorsicherung, ermöglicht, deren Nennstromstärke über dem Nennstrom des FI-Schalters liegt.

Dieses Problem ist bis heute nicht zufriedenstellend gelöst worden. FI-Schalter werden nämlich in bezug auf ihre Erwärmung nur mit dem Nennstrom geprüft. Die Überstromschutzeinrichtungen, die jedoch in der Praxis netzseitig vor den FI-Schaltern installiert werden, haben Nennströme, die wegen der Selektivität mit den nachgeschalteten Überstromschutzeinrichtungen für die Endstromkreise meist um zwei bis drei Nennstromstufen höher liegen als der Nennstrom des FI-Schalters. Eine häufige Anordnung ist z.B. der Nennstrom 40 A für den FI-Schalter und 63 A für die vorgeschaltete Schmelzsicherung. Diese Anordnung wird in den Normen zwar bezüglich der Verschweißungs- und Kurzschlußfestigkeit bei hohen Kurzschlußströmen an der Einbaustelle, z.B. mit 6000 A geprüft, nicht jedoch in bezug auf die Erwärmung. Überstromschutzeinrichtungen beginnen ja erst beim 1,45fachen Nennstrom auszulösen, also eine 63 A-Schmelzsicherung wird unter günstigen Bedingungen bei Belastung mit 90 A nach etwa einer Stunde ausschalten, bei ungünstigen Bedingungen z.B. guter Wärmeableitung, sogar erst bei noch höheren Strömen. Bei derartigen Belastungen wird aber der FI-Schalter schon nach kurzer Zeit zerstört und bildet eine beachtliche Kurzschluß- und Brandgefahr. Diese Belastungen können aber in der Praxis auftreten, wenn die normalen Betriebsströme der Verbraucher in der Anlage in ihrer Summe hoch sind und bei ungünstigem Gleichzeitigkeitsfaktor über dem Nennstrom des FI-Schalters liegen. Dies ist ohne weiteres möglich, da die Summe der Nennströme der nachgeschalteten Überstromschutzeinrichtungen für die Endstromkreise meist wesentlich höher ist, als der Nennstrom des FI-Schalters. Deshalb ist in manchen Ländern vorgeschrieben, daß der Nennstrom der Überstromschutzeinrichtung vor dem FI-Schalter nicht höher sein darf als sein Nennstrom. Abgesehen davon, daß dies die Selektivität des Überstromschutzes herabsetzt, reicht auch diese Forderung nicht aus, um den FI-Schalter vor Schaden zu bewahren, denn auch in diesem Fall kann der 1,45fache Nennstrom des FI-Schalters eine Stunde oder noch länger fließen und damit wird mehr als die doppelte Verlustleistung im Schalter frei, als jene, mit der die Erwärmungsprüfung durchgeführt worden ist.

Es gibt zahlreiche Lösungsvorschläge für dieses Problem (z.B. AT-B-220 695, 235 936, DE-B-1 188 706, FR-A-1 508 704 und DE-A-1 588 723).

So beschreibt z.B. die DE-B-1 588 723 einen Fehlerstromschutzschalter mit Temperaturüberwachung, die darin besteht, daß ein Bimetall wärmeschlüssig mit dem Kern des Summenstromwandlers verbunden ist. Wird der Kern zu heiß, dann biegt sich das Bimetall so weit durch, daß der sowieso vorhandene Kontakt der Prüfeinrichtung des FI-Schalters dadurch mechanisch geschlossen wird und damit der FI-Schalter über die Prüfeinrichtung ausschaltet.

Die FR-A-1 508 704 beschreibt eine Lösung mit einem Varistor, der im Summenstromwandler des FI-Schalters angeordnet ist und über eine Gleichrichterschaltung und Stromwandler in den Hauptstromkreisen mit Strom versorgt wird. Bei Überlastung entklinkt der Schaltmechanismus über eine besondere Wicklung im Fehlerstromauslöser und der FI-Schalter schaltet aus.

Alle beschriebenen Lösungen haben sich in der Praxis nicht durchgesetzt. Sie waren entweder zu aufwendig oder zu wenig zuverlässig, um bei ein- oder dreiphasigen Überlastungen den FI-Schalter vor der Zerstörung zu schützen.

Im Gegensatz dazu wird erfindungsgemäß die Energiespeicherschaltung, die beim FI-Schalter mit Wandlerrelais nach Patentanspruch 1 vorhanden ist, benützt, um zusammen mit einem Widerstand mit negativem Temperaturkoeffizienten (NTC-Widerstand, in der Folge kurz Thermistor genannt), der nach dem bekannten Stand der Technik im Summenstromwandler des FI-Schalters angeordnet ist, kostengünstig und wirkungsvoll den FI-Schalter gegen Überlastungen zu schützen. Den Kurzschlußschutz und den Schutz gegen Verschweißungen übernimmt bei dieser Lösung wie bisher die vorgeschaltete Überstromschutzeinrichtung.

Um sowohl bei einphasigen als auch bei dreiphasigen Überlastungen gegen Überlast zu schützen, wird der Thermistor im Summenstromwandler wärmeschlüssig mit den Oberflächen der Außenleiter- und der Neutralleiter-Primärwicklungen angeordnet. Er ist einerseits mit einem Leiter des Hauptstromkreises (z.B. einem Außenleiter) verbunden, anderseits mit einem Zweipol in Serie geschaltet), den die Energiespeicherschaltung bildet und dessen zweiter Pol ebenfalls mit einem Leiter des Hauptstromkreises (z.B. dem Neutralleiter) verbunden ist. Bei Nennbetrieb fließt über den Thermistor nur ein geringer Strom, der über einen geeigneten Spannungsteiler die Energiespeicherschaltung nur wenig beeinflußt und den Speicherkondensator auf einen Bruchteil der Spannung auflädt, die für das Leitendwerden des spannungsabhängigen Schaltorgans der Energiespeicherschaltung erforderlich ist. Dadurch wird eine Art Energievorspeicherung erzielt, die auch benützt werden kann, um die Auslösekennlinie des FI-Schalters in bestimmten Grenzen zu ändern. Diese Vorspannung ist auch günstig, weil dadurch die Elektronik der Energiespeicherschaltung unter optimaler Bedingung arbeitet (günstigste Betriebseigenschaften für die Gleichrichterschaltung und den Speicherkondensator), die bei der Lebensdauerberechnung als "dormant mode failure rate" - Bedingung gewertet werden kann. Dies ist Stand der Technik (AT-B-197 468 und AT-B-205 574).

Bei der Schaltung des Thermistor werden erfindungsgemäß zwei Varianten zur Auswahl gestellt. Entweder wird die Energiespeicherschaltung als Zweipol so geschaltet, daß die Anschlüsse des Thermistorkreises parallel zu den Anschlüssen der Sekundärwicklung des Summenstromwandlers geschaltet sind. Der Thermistorstrom wirkt dann als Wechselstrom genauso wie der Sekundärstrom des Summenstromwandlers. Ein Nachteil dieser Schaltung ist die gegenseitige Beeinflussung von Sekundärstrom und Thermistorstrom, die jedoch durch entsprechende Dimensionierungen beherrscht werden kann.

Bei der zweiten Lösung wird noch ein Gleichrichter in den Thermistorkreis geschaltet und als Zweipol dienen bei der Energiespeicherschaltung die beiden Anschlüsse des Speicherkondensators. Auch hier wird, wie oben dargestellt, bei Nennbetrieb der Speicherkondensator auf eine geringe Vorspannung aufgeladen und er arbeitet daher unter optimalen Betriebsbedingungen. Selbstverständlich können nach den Regeln der Technik in den Thermistorkreis für die Dimensionierung noch Vor- oder Parallelwiderstände oder Bauelemente für den Überspannungsschutz eingesetzt werden. Die Energiespeicherschaltung bringt auch noch den Vorteil, daß der Thermistor nur für geringe Betriebsströme dimensioniert zu werden braucht.

Die Fehlerstromauslösung arbeitet nach wie vor über die Energiespeicherschaltung netzspannungsunabhängig und nur die Temperaturüberwachung des FI-Schalters hängt funktionell von der Netzspannung ab.

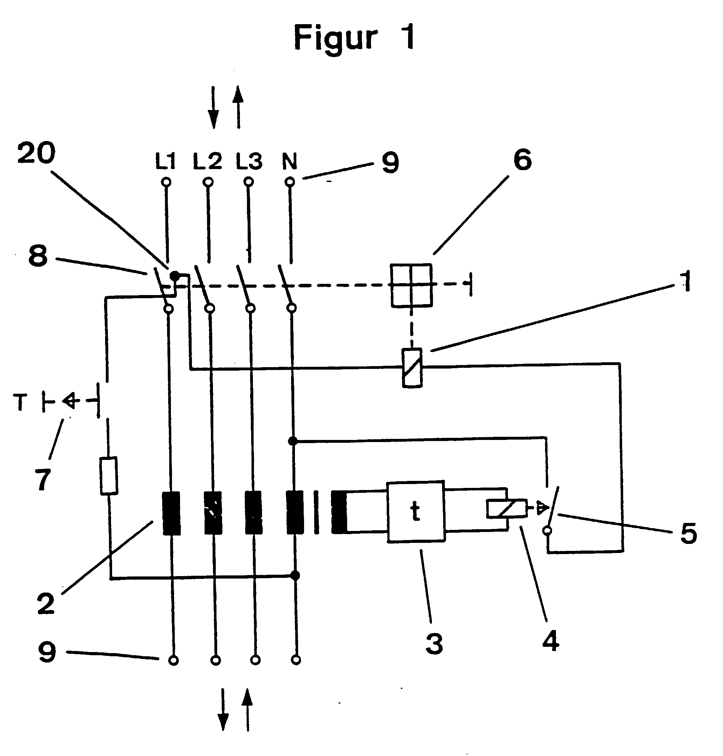

Im folgenden wird die Erfindung anhand der in den Figuren 1 bis 10 gezeigten Ausführungsbeispiele näher beschrieben.

Figur 1 zeigt einen erfindungsgemäßen FI-Schalter, der mit einem monostabilen Wandlerrelais mit Spule 4 arbeitet. Die Sekundärwicklung des Summenstromwandlers 2 ist über eine netzspannungsunabhängige Energiespeicherschaltung 3 mit der Spule des monostabilen Wandlerrelais 4 verbunden. Überschreitet der Fehlerstrom in der Primärwicklung des Summenstromwandlers 2 einen vorbestimmten Wert, dann gibt die Energiespeicherschaltung einen ausreichend langen Betätigungsimpuls auf das Wandlerrelais 4, wodurch der Relaiskontakt 5 so lange geschlossen wird, daß bei eingeschaltetem Schalter der Schloßauslöser 1 das Schaltschloß 6 sicher betätigt. Dadurch werden die Schalterkontakte 8 und der Unterbrecherkontakt 20 geöffnet. Danach kehrt das monostabile Wandlerrelais wieder in seine Ausgangslage zurück, wodurch der Relaiskontakt 5 geöffnet wird und der FI-Schalter kann von Hand aus wieder eingeschaltet werden.

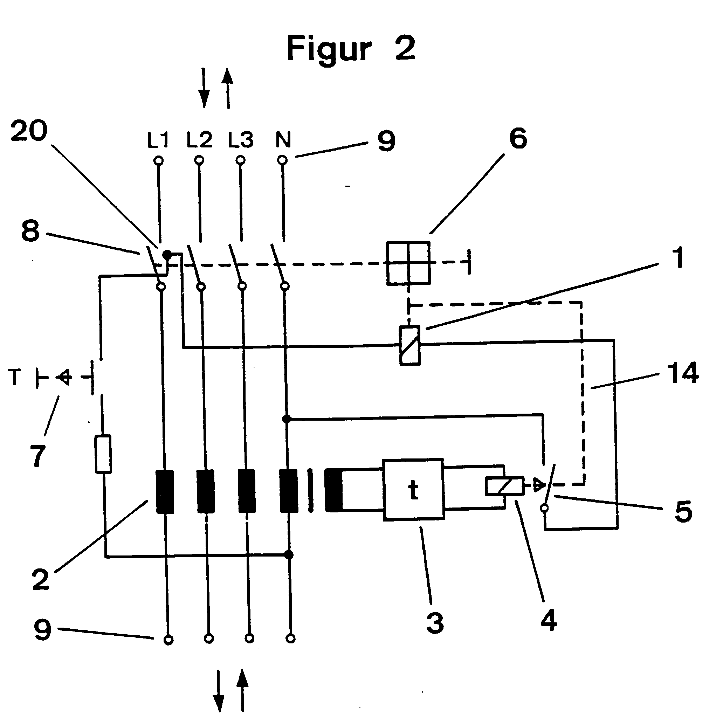

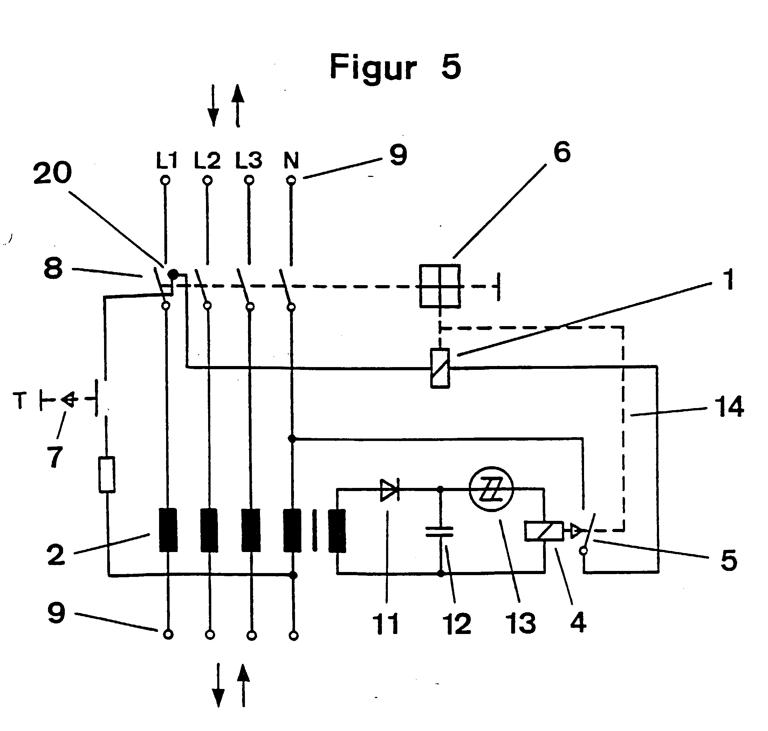

Der Anschluß der Netzleitungen erfolgt unabhängig von Anschlußklemmen 9 der Netz- und Verbraucherseite, wie auch bei den Lösungen, die in den Figuren 2 und 5 dargestellt sind.

Die erfindungsgemäßen FI-Schalter können auch mit den üblichen Prüfeinrichtungen 7 ausgestattet sein.

Figur 2 zeigt einen erfindungsgemäßen FI-Schalter, der mit einem bistabilen Wandlerrelais mit Spule 4 arbeitet. Die Sekundärwicklung des Summenstromwandlers 2 ist wieder über eine netzspannungsunabhängige Energiespeicherschaltung 3 mit der Spule des bistabilen Wandlerrelais 4 verbunden. Überschreitet der Fehlerstrom in der Primärwicklung des Summenstromwandlers 2 einen vorbestimmten Wert, dann gibt die Energiespeicherschaltung einen Betätigungsimpuls auf das Wandlerrelais 4 ab, wodurch der Relaiskontakt 5 geschlossen wird und zunächst in dieser Lage bleibt. Damit wird bei eingeschaltetem Schalter der Schloßauslöser 1 durch den vom Netz kommenden Erregerstrom betätigt und löst das Schaltschloß 6 aus. Dadurch werden die Schalterkontakte 8 und der Unterbrecherkontakt 20 geöffnet. Während des Ausschaltvorganges wird durch eine mechanische Kopplung 14 das bistabile Wandlerrelais 4 vom Schaltschloß 1 wieder in seine Ausgangslage gebracht und der FI-Schalter kann von Hand aus wieder eingeschaltet werden.

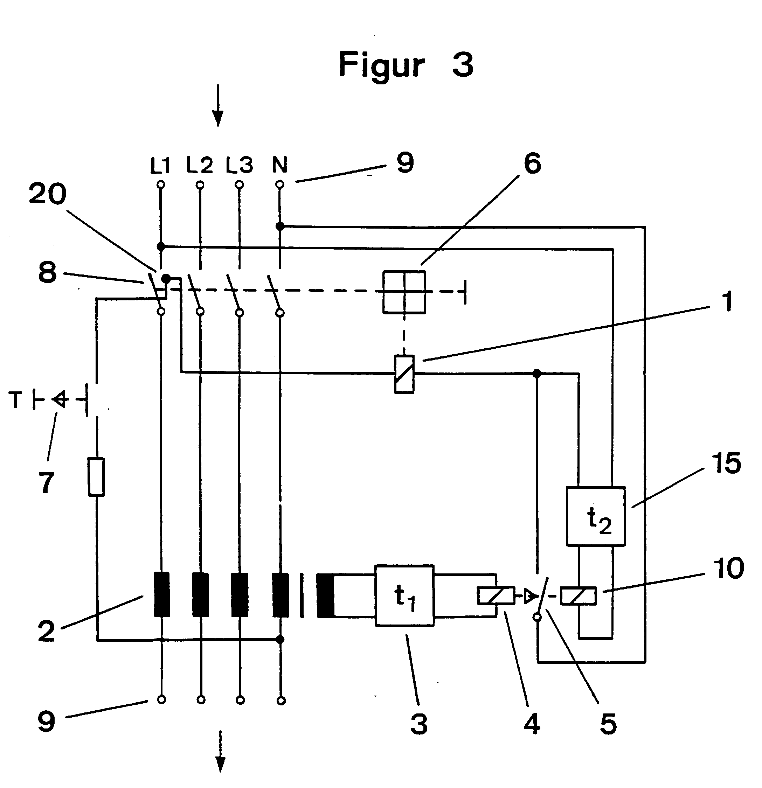

Figur 3 zeigt einen erfindungsgemäßen FI-Schalter, der ebenfalls mit einem bistabilen Wandlerrelais mit Spule 4 arbeitet. Die Sekundärwicklung des Summenstromwandlers 2 ist wieder über eine netzspannungsunabhängige Energiespeicherschaltung 3 mit der Spule des bistabilen Wandlerrelais 4 verbunden und die Funktion bei der Auslösung ist die gleiche wie bei Figur 2 beschrieben. Die Rückstellung des bistabilen Wandlerrelais 4 erfolgt aber elektrisch durch eine geeignete Zeitverzögerungsschaltung 15, die netzspannungsabhängig arbeitet und durch die der Relaiskontakt 5 über die Rückstellspule 10 in seine Ausgangslage gebracht wird.

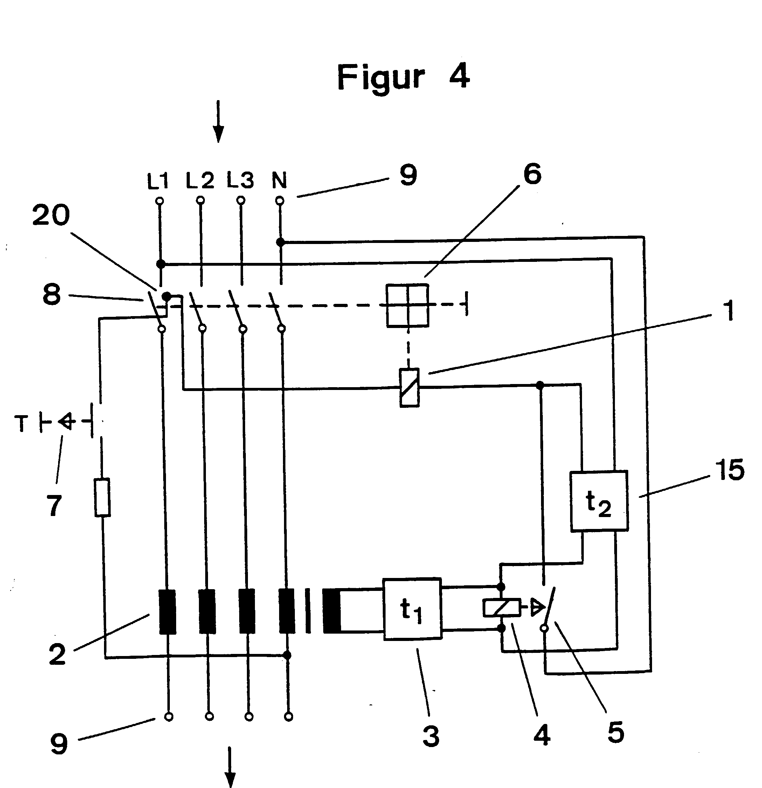

Figur 4 zeigt einen erfindungsgemäßen FI-Schalter, der ebenfalls mit einem bistabilen Wandlerrelais mit Spule 4 arbeitet. Die Funktion ist die gleiche wie bei den FI-Schaltern der Figuren 2 und 3 beschrieben. Der Unterschied besteht nur darin, daß das bistabile Wandlerrelais 4 nur eine Relaisspule besitzt, die sowohl für die Auslösung des FI-Schalters durch den Schaltschloßauslöser 1 benutzt wird, als auch zur Rückstellung des Relaiskontaktes 5 dient. Die Rückstellung erfolgt wieder durch eine geeignete Zeitverzögerungsschaltung 15, die netzspannungsabhängig arbeitet und netzseitig mit Netzleitungen verbunden ist.

Bei den Schaltungen nach Figur 3 und 4 muß beim Anschluß des FI-Schalters Netz- und Verbraucherseite beachtet werden.

Figur 5 zeigt beispielhaft eine Schaltung für die netzspannungsunabhängige Energiespeicherschaltung 3, die aus einer Gleichrichterschaltung 11 besteht, die beim Fließen des Fehlerstromes im Summenstromwandler 2 einen Speicherkondensator 12 auflädt. Nach Erreichen einer bestimmten Ladespannung und damit auch der für die Betätigung des Wandlerrelais 4 notwendigen Ladeenergie, wird ein Halbleiterbaustein 13 leitend und die Ladeenergie entlädt sich impulsartig über die Spule des Wandlerrelais 4, wodurch der Relaiskontakt 5 geschlossen wird und damit der Schloßauslöser vom Netz seinen Erregerstrom erhält. Durch die Ausschaltbewegung des Schaltschlosses 6 wird das WandlerRelais mechanisch rückgestellt, wodurch der Relaiskontakt 5 öffnet und außerdem durch den Unterbrecherkontakt 20 der Stromkreis für den Schloßauslöser und der Prüfstromkreis unterbrochen wird. Der Anschluß des FI-Schalters ist also unabhängig von Netz- und Verbraucherseite.

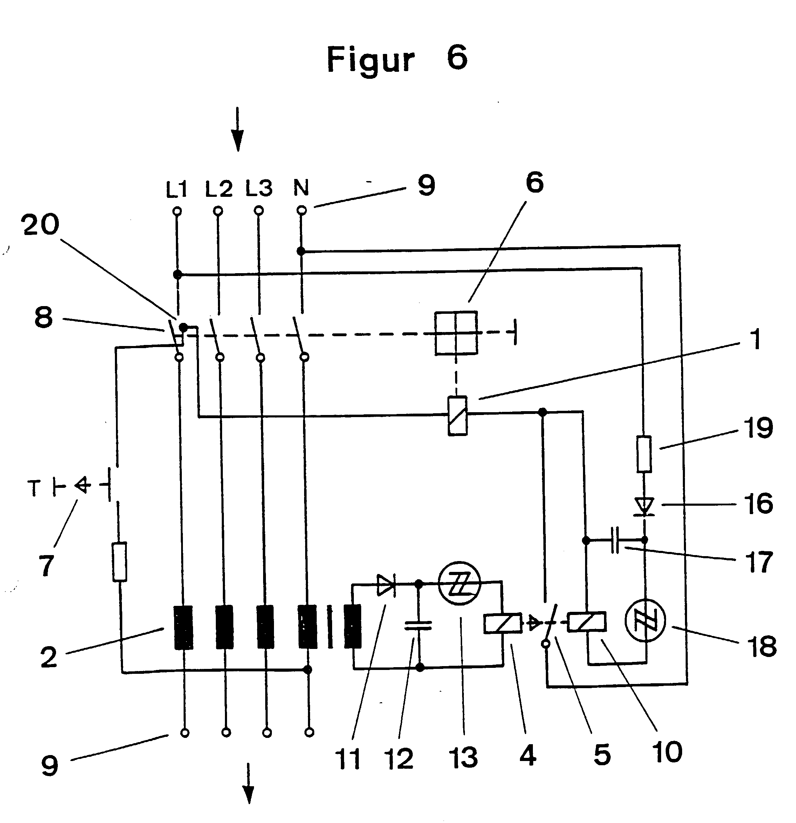

Figur 6 zeigt beispielhaft eine Zeitverzögerungsschaltung für die elektrische Rückstellung des bistabilen Wandlerrelais. Nach der Auslösung des FI-Schalters, wie bei Figur 2 und 3 beschrieben, beginnt über einen besonderen Stromkreis, der vor den Unterbrecherkontakten 8 netzseitig mit den Netzleitungen verbunden ist und durch den Relaiskontakt 5 geschlossen wird, gleichzeitig mit der Auslösung des FI-Schalters durch den Schloßauslöser 1 die Aufladung einer netzspannungsabhängigen Energiespeicherschaltung (nicht zu verwechseln mit der netzspannungsunabhängigen Energiespeicherschaltung, die mit dem Wandlerrelais verbunden ist). Die Aufladung des Ladekondensators 17 erfolgt über den Ladewiderstand 19 und eine Gleichrichterschaltung 16. Nach Erreichen der notwendigen Ladeenergie für die Betätigung der Rückstellspule 10 des Wandlerrelais 4 wird der Halbleiterbaustein 18 leitend und die Rückstellung erfolgt impulsartig durch die Rückstellspule 10. Beim Anschluß eines FI-Schalters dieser Konstruktion muß Netz- und Verbraucherseite beachtet werden, obwohl der Unterbrecherkontakt 20 den Stromkreis für den Schloßauslöser und den Prüfstromkreis unterbricht.

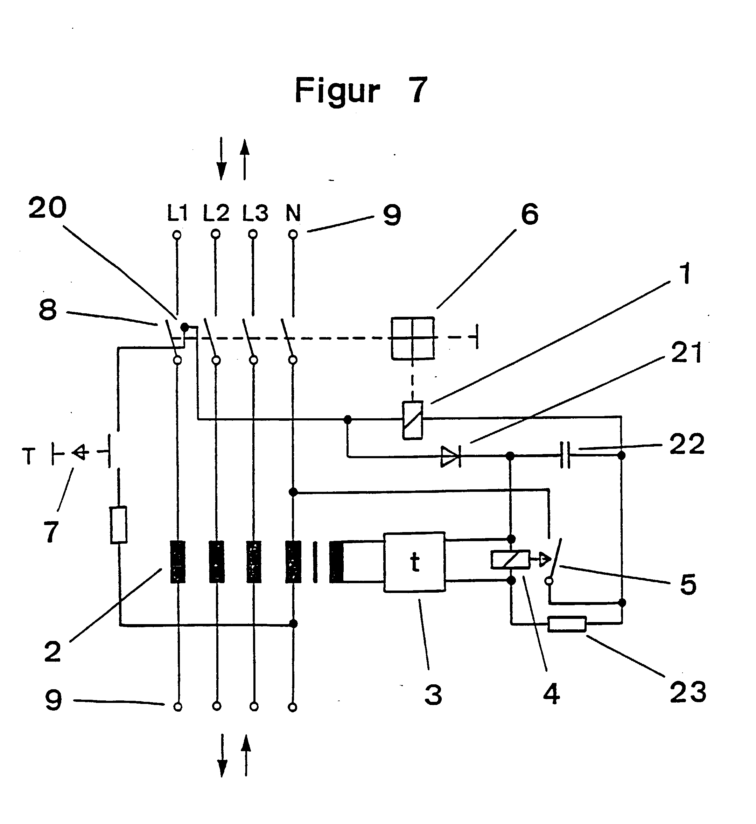

Figur 7 zeigt einen erfindungsgemäßen Schalter, der mit einem monostabilen Relais 4 arbeitet. Die Sekundärwicklung des Summenstromwandlers 2 ist über eine netzspannungsunabhängige Energiespeicherschaltung 3 mit dem monostabilen Wandlerrelais 4 verbunden. Überschreitet der Fehlerstrom in der Primärwicklung des Summenstromwandlers 2 einen vorbestimmten Wert, dann gibt die Energiespeicherschaltung einen Betätigungsimpuls auf das Wandlerrelais 4, wodurch der Relaiskontakt 5 geschlossen wird. Gleichzeitig beginnt über die Relaiswicklung 4 vom Netz der Strom über den Gleichrichter 21 und den Strombegrenzungswiderstand 23 zu fließen und hält dadurch das monostabile Relais 4 in der Einstellung. Der Kondensator 22 wirkt als Glättungskondensator. Durch den Stromfluß vom Netz über den Arbeitsstromauslöser und den geschlossenen Relaiskontakt 5 wird das Schaltschloß 6 betätigt und der Kontaktapparat 8 mit dem Hilfskontakt 20 öffnet. Damit ist auch der Haltestromkreis unterbrochen und das monostabile, elektromechanische Relais kehrt in seine Ausgangslage zurück.

Figur 8 zeigt einen erfindungsgemäßen Schalter, der mit einem Thyristor als Wandlerrelais 4 arbeitet. Die Sekundärwicklung des Summenstromwandlers 2 ist über eine netzspannungsunabhängige Energiespeicherschaltung 3 mit den Eingängen der Thyristorschaltung 4 verbunden.

Überschreitet der Fehlerstrom in der Primärwicklung des Summenstromwandlers 2 einen vorbestimmten Wert, dann wird der Thyristor leitend und dadurch wird der Schloßauslöser 1 betätigt. Nach dem Ausschalten des FI-Schalters kehrt der Thyristor 4 wieder in den Sperrzustand zurück.

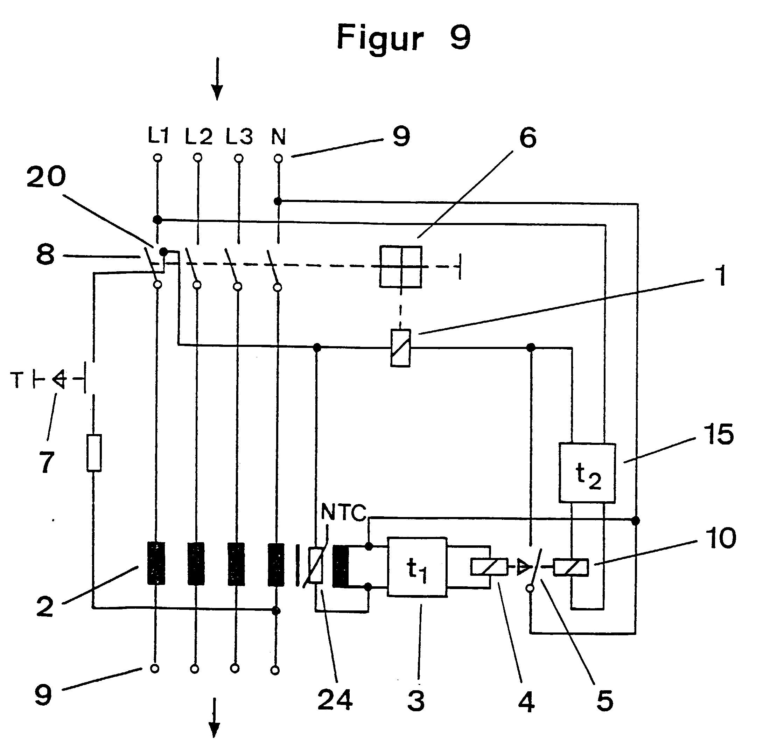

Figur 9 zeigt einen erfindungsgemäßen Schalter mit Überlastschutz durch einen Thermistor 24 im Summenstromwandler 2, der über den Hilfskontakt 20 im eingeschalteten Zustand des FI-Schalters mit einem Außenleiter L1 verbunden ist. Das andere Ende des Thermistors ist mit einem Pol des Eingangskreises der Energiespeicherschaltung 3 verbunden, an den auch ein Ende der Sekundärwicklung des Summenstromwandlers angeschlossen ist. Der andere Pol des Eingangskreises der Energiespeicherschaltung, an den das andere Ende der Sekundärwicklung des Summenstromwandlers angeschlossen ist, ist mit dem Neutralleiter N verbunden.

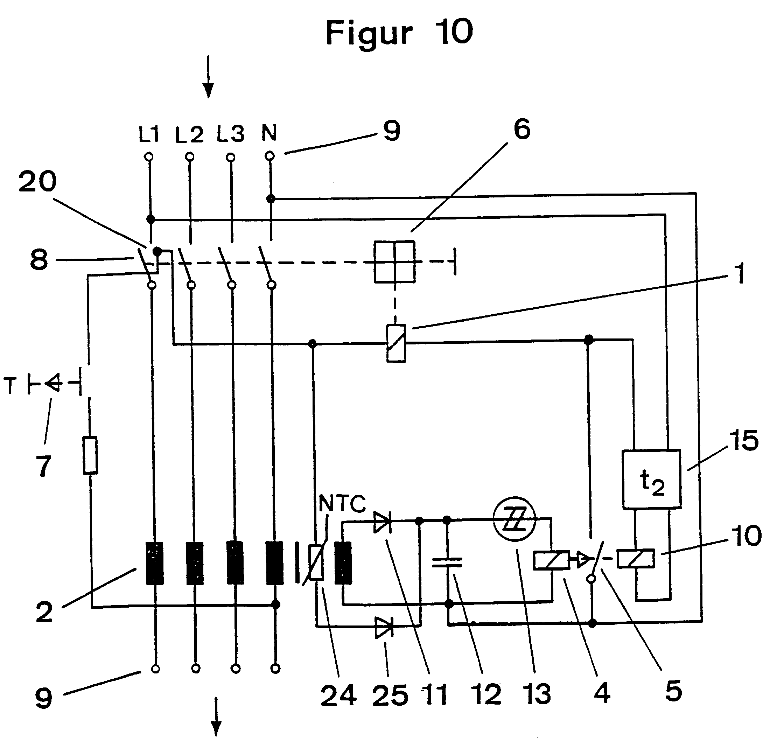

Figur 10 zeigt einen erfindungsgemäßen Schalter mit Überlastschutz durch einen Thermistor 24 im Summenstromwandler 2, der über den Hilfskontakt 20 im eingeschalteten Zustand des FI-Schalters mit einem Außenleiter L1 verbunden ist. Das andere Ende des Thermistors ist über einen Gleichrichter 25 mit einem Anschluß des Speicherkondensators 12 verbunden, dessen anderes Ende an den Neutralleiter N angeschlossen ist.

## Patentansprüche

1. Fehlerstromschutzschalter, bestehend aus einem Gehäuse mit Anschlußklemmen für Netzleitungen, in dem ein Kontaktapparat mit zugehörigem Schaltschloß, eine Prüfeinrichtung, ein Betätigungsorgan, ein elektromagnetischer Arbeitsstromauslöser (1) für das Schaltschloß, ein Summenstromwandler, eine netzspannungsunabhängige elektronische Energiespeicherschaltung, die aus einer Gleichrichterschaltung (11), einem Speicherkondensator (12) und einem spannungsabhängigen, elektronischen Schaltbaustein (13) besteht, und ein Relais (4) oder ein Thyristor (4) mit dazugehörigem Schließkontakt (5) bzw. Thyristorschaltstrecke untergebracht sind, wobei die Sekundärwicklung des Summenstromwandlers im Fehlerstromfall unabhängig von der Netzspannung die elektronische Energiespeicherschaltung auflädt und beim Überschreiten eines bestimmten, durch den spannungsabhängigen, elektronischen Schaltbaustein (13) festgelegten Grenzwertes des Auslösefehlerstromes die Energiespeicherschaltung (3) das Relais (4) betätigt bzw. den Thyristor durchzündet, wobei das Relais nicht nach dem Halte- oder Sperrmagnetprinzip arbeitet und durch das Schließen des dazugehörigen Relaiskontaktes (5) bzw. der Thyristorschaltstrecke der Arbeitsstromauslöser (1) mit höherer Auslösekraft als bei einem Auslöser nach dem Halte- oder Sperrmagnetprinzip netzspannungsabhängig das Schaltschloß (6) betätigt, wodurch der Fehlerstromschutzschalter ausschaltet und danach das Relais in seine Ausgangsstellung zurückkehrt bzw. der Thyristor seinen nichtleitenden Zustand einnimmt.

2. Fehlerstromschutzschalter nach Anspruch 1, dadurch gekennzeichnet, daß das Relais (4) mit einer Spule als monostabiles, elektromechanisches Relais ausgeführt ist, das durch den Impuls der Energiespeicherschaltung (3) seinen Arbeitskontakt (5) vorübergehend schließt, wobei die elektrischen Daten der Energiespeicherschaltung und der Wicklung des Relais so aufeinander abgestimmt sind, daß der Auslöseimpuls und damit die Einschaltdauer des Relaiskontaktes (5) lang genug sind, um den Schloßauslöser (1) des Schaltschlosses (6) sicher zu betätigen.

3. Fehlerstromschutzschalter nach Anspruch 1, dadurch gekennzeichnet, daß das monostabile elektromechanische Relais (4) nach Betätigung durch die netzspannungsunabhängige Energiespeicherschaltung (3) mit seinem Schließkontakt (5) durch eine elektronische Halteschaltung (21, 22, 23) solange in der Einschaltstellung gehalten wird, bis über den Schloßauslöser (1) und das Schaltschloß (6) der Kontaktapparat (8) mit dem Hilfskontakt (20) ausgeschaltet hat.

4. Fehlerstromschutzschalter nach Anspruch 1, dadurch gekennzeichnet, daß das Relais (4) mit einer Spule als bistabiles, elektromechanisches Relais ausgeführt ist, das durch den Impuls der Energiespeicherschaltung (3) einen Arbeitskontakt (5) schließt und damit den Schloßauslöser (1) des Schaltschlosses (6) betätig und durch den Ausschaltvorgang die Rückstellung des Relais in seine Ausgangsstellung mittels einer mechanischen Kupplung (14) mit dem Schaltschloß (6) erfolgt.

5. Fehlerstromschutzschalter nach Anspruch 1, dadurch gekennzeichnet, daß das Relais (4) mit einer Spule als bistabiles, elektromechanisches Relais ausgeführt ist, das durch den Impuls der Energiespeicherschaltung (3) einen Arbeitskontakt (5) schließt und damit den Schloßauslöser (1) des Schaltschlosses (6) betätigt und die Rückstellung des Relais elektrisch durch eine zusätzliche Rückstellspule (10) des Wandlerrelais erfolgt, die über eine elektronische Zeitverzögerungsschaltung (15) mit den Netzleitungen verbunden ist.

6. Fehlerstromschutzschalter nach Anspruch 1, dadurch gekennzeichnet, daß das Relais (4) mit einer Spule als bistabiles, elektromechanisches Relais ausgeführt ist, das durch den Impuls der Energiespeicherschaltung (3) einen Arbeitskontakt (5) schließt und damit den Schloßauslöser (1) des Schaltschlosses (6) betätigt und die Rückstellung des Relais durch die gleiche Spule (4) erfolgt, die nicht nur mit der Energiespeicherschaltung (3), sondern auch über eine elektronische Zeitverzögerungsschaltung (15) mit den Netzleitungen verbunden ist.

7. Fehlerstromschutzschalter nach den Ansprüchen 5 und 6, dadurch gekennzeichnet, daß die Zeitverzögerungsschaltung (15) aus einer Gleichrichterschaltung (16), einem Speicherkondensator (17) und einem spannungsabhängigen, elektronischen Schaltbaustein (18) besteht und über einen Ladewiderstand (19) netzspannungsabhängig mit Energie versorgt wird.

8. Fehlerstromschutzschalter nach einem der Ansprüche 1 bis 7, dadurch gekennzeichnet, daß im Summenstromwandler (2) ein Widerstand mit negativem Temperaturkoeffizienten (24) eingebaut ist, über den ein Hilfsstromkreis führt, der an zwei Hauptstrombahnen des Fehlerstromschutzschalters angeschlossen ist und dadurch beim Überschreiten der zulässigen Übertemperatur im Summenstromwandler über die Energiespeicherschaltung (3) der Fehlerstromschutzschalter ausgelöst wird.

9. Fehlerstromschutzschalter nach Anspruch 8, dadurch gekennzeichnet, daß der Anschluß des Hilfsstromkreises an die Energiespeicherschaltung (3) parallel zu den Anschlüssen der Sekundärwicklung des Summenstromwandlers (2) erfolgt.

10. Fehlerstromschutzschalter nach Anspruch 8, dadurch gekennzeichnet, daß der Anschluß des Hilfsstromkreises an die Energiespeicherschaltung (3) über eine Gleichrichterschaltung (25) parallel zu den Anschlüssen des Speicherkondensators (12) erfolgt.

## Claims

1. Fault current protective switch, comprising a housing with connector terminals for mains supply, and in which are housed a contact apparatus with an associated switch latch, a testing device, an actuating member, and an electromagnetic working current release (1) for the switch latch, a cumulative current transformer, and electronic power-storage circuit independent of mains voltage, and which comprises a rectifier circuit (11), a storage condenser (12) and a voltage-dependent electronic circuit component (13), and a relay (4) or a thyristor (4) with associated switch contact (5) or thyristor circuit path, the secondary winding of the cumulative current transformer, upon occurrence of a fault current, charging the electronic power storage circuit independently of the mains voltage and, when a specific threshold value of the release fault current, determined by the voltage-dependent electronic circuit component (13), is exceeded, the power storage circuit (3) charges the relay (4) or ignites a thyristor, the relay not operating according to the retaining or blocking magnet principle, and, by means of closing the associated relay contact (5) or the thyristor circuit path, the working current release (1) actuates the switch latch (6) dependent on mains voltage with a higher release force than a release operating on the retaining or blocking magnet principle, so that the fault current protective switch switches off and thereafter the relay reverts to its initial position, or the thyristor adopts its non-conductive state.

2. Fault current protective switch according to claim 1, characterised in that the relay (4) is constructed with a coil as a monostable electromechanical relay which temporarily closes its working contact (5), by means of the pulse from the power storage circuit (3), the electrical data of the power storage circuit and the winding of the relay being so coordinated to one another that the release pulse and thus the switch-on duration of the relay contact (5) are long enough in order to actuate the latch release (1) of the switch latch (6) reliably.

3. Fault current protective switch according to claim 1, characterised in that the monostable electromechanical relay (4), after actuation by the power storage circuit (3) independent of mains voltage, is held with its closer contact (5) by an electronic locking circuit (21, 22, 23) in the switched-on position until the contact apparatus (8) with the auxiliary contact (20) has switched off via the latch release (1) and the switch latch (6).

4. Fault current protective switch according to claim 1, characterised in that the relay (4) is constructed with a coil as a bistable electromechanical relay which, by means of the pulse of the power storage circuit (3) closes a working contact (5) and thus actuates the latch release (1) of the switch latch (6), and return of the relay to its initial position is effected by means of a mechanical coupling (14) with the switch latch (6).

5. Fault current protective switch according to claim 1, characterised in that the relay (4) is constructed with a coil as a bistable electromechanical relay which, by means of the pulse of the power storage circuit (3) closes a working contact (5) and thus actuates the latch release (1) of the switch latch (6), and the return of the relay is effected electrically by means of an additional return coil (10) of the transformer relay, which is connected to the mains supply by an electronic time-delay circuit (15).

6. Fault current protective switch according to claim 1, characterised in that the relay (4) is constructed with a coil as a bistable electromechanical relay which, by means of the pulse of the power storage circuit (3) closes a working contact (5) and thus actuates the latch release (1) of the switch latch (6), and the return of the relay is effected by the same coil (4) which is connected, not only to the power storage circuit (3) but also, via an electronic time-delay circuit (15, to the mains supply.

7. Fault current protective switch according to claims 5 and 6, characterised in that the time-delay circuit (15) comprises a rectifier circuit (16), a storage condenser (17) and a voltage-dependent electronic circuit component (18), and is supplied with power in dependence on mains voltage via a charging resistance (19).

8. Fault current protective switch according to one of claims 1 to 7, characterised in that there is incorporated in the cumulative current transformer (2) a resistance with a negative temperature coefficient (24) through which there passes an auxiliary power circuit which is connected to two main current paths of the fault current protective switch and thus, when the acceptable temperature in the cumulative current transformer is exceeded, the fault current protective switch is released via the power storage circuit (3).

9. Fault current protective switch according to claim 8, characterised in that contact of the auxiliary current circuit to the power storage circuit (3) is effected parallel to the contacts of the secondary winding of the cumulative current transformer (2).

10. Fault current protective switch according to claim according to claim 8, characterised in that contact of the auxiliary current circuit to the power storage circuit (3) is effected via a rectifier circuit (25) parallel to the contacts of the storage condenser (12).

## Revendications

1. Disjoncteur à courant de défaut, comprenant un boîtier avec des bornes de connexion pour des lignes de réseau, dans lequel sont logés un contacteur à verrou de maintien associé, un dispositif de contrôle, un organe d'actionnement, un déclencheur (1) électromagnétique à courant de travail pour le verrou de maintien, un transformateur d'intensité, un circuit électronique d'accumulation d'énergie indépendant de la tension du réseau, formé d'un circuit redresseur (11), d'un condensateur (12) d'accumulation et d'un composant (13) électronique de commutation, asservi à la tension, et un relais (4) ou un thyristor (4) à contact de fermeture (5) correspondant ou un circuit de commutation à thyristor, l'enroulement secondaire du transformateur d'intensité assurant la charge du circuit électronique d'accumulation d'énergie de manière indépendante de la tension du réseau en présence d'un courant de défaut et le circuit électronique d'accumulation d'énergie (3) actionnant le relais (4) ou amorçant le thyristor, lorsque le courant de défaut de déclenchement dépasse un seuil déterminé, fixé par le composant (13) électronique asservi à la tension, le relais ne fonctionnant pas selon le principe à aimant de maintien ou aimant de blocage, et la fermeture du contact de relais (5) correspondant ou du circuit à thyristor provoquant l'actionnement du verrou de maintien (6) de manière asservie à la tension du réseau par le déclencheur (1) à courant de travail, avec une force de déclenchement supérieure à celle d'un déclencheur utilisant le principe à aimant de maintien ou à aimant de blocage, le disjoncteur à courant de défaut commutant à l'état ouvert et le relais revenant dans sa position initiale ou le thyristor reprenant son état non passant.

2. Disjoncteur à courant de défaut selon la revendication 1, caractérisé par le fait que le relais (4) est un relais électromécanique monostable avec une bobine, qui, sous l'impulsion délivrée par le circuit (3) d'accumulation d'énergie, ferme pendant un court instant son contact (5) de travail, les caractéristiques électriques du circuit d'accumulation d'énergie et de l'enroulement du relais étant mutuellement adaptées de telle sorte que l'impulsion de déclenchement et ainsi la durée de fermeture du contact (5) de relais soient suffisamment longues pour actionner le déclencheur (1) du verrou (6) de maintien.

3. Disjoncteur à courant de défaut selon la revendication 1, caractérisé par le fait que le relais (4) électromécanique monostable, après son actionnement par le circuit (3) d'accumulation d'énergie indépendant de la tension du réseau, avec son contact de fermeture (5), est maintenu dans la position fermée par un circuit de maintien (21, 22, 23) électronique jusqu'à ce que le contacteur (8) avec le contact (20) auxiliaire soit commuté à l'état ouvert par l'intermédiaire du déclencheur (1) et du verrou de maintien (6).

4. Disjoncteur à courant de défaut selon la revendication 1, caractérisé par le fait que le relais (4) est un relais électromécanique bistable avec une bobine, qui, sous l'impulsion délivrée par le circuit (3) d'accumulation d'énergie, ferme un contact (5) de travail et actionne ainsi le déclencheur (1) du verrou (6) de maintien, et que le processus de coupure provoque le retour du relais à son état initial, grâce à un couplage (14) mécanique avec le verrou (6) de maintien.

5. Disjoncteur à courant de défaut selon la revendication 1, caractérisé par le fait que le relais (4) est un relais électromécanique bistable avec une bobine, qui, sous l'impulsion délivrée par le circuit (3) d'accumulation d'énergie, ferme un contact (5) de travail et actionne ainsi le déclencheur (1) du verrou (6) de maintien, et que le réarmement du relais (4) est opéré par une bobine de réarmement (10) de relais supplémentaire qui est connectée aux lignes du réseau par l'intermédiaire d'un circuit (15) électronique de temporisation.

6. Disjoncteur à courant de défaut selon la revendication 1, caractérisé par le fait que le relais (4) est un relais électromécanique bistable avec une bobine, qui, sous l'impulsion délivrée par le circuit (3) d'accumulation d'énergie, ferme un contact (5) de travail et actionne ainsi le déclencheur (1) du verrou (6) de maintien, et que le réarmement du relais est opéré par la même bobine (4) qui est connectée, non seulement au circuit (3) d'accumulation d'énergie, mais encore aux lignes du réseau par l'intermédiaire d'un circuit (15) électronique de temporisation.

7. Disjoncteur à courant de défaut selon les revendications 5 et 6, caractérisé par le fait que le circuit (15) de temporisation se compose d'un circuit redresseur (16), d'un condensateur d'accumulation (17) et d'un composant (18) électronique de commutation, asservi à la tension du réseau et est alimenté en énergie, de manière asservie à la tension du réseau, par l'intermédiaire d'une résistance (19) de charge.

8. Disjoncteur à courant de défaut selon l'une des revendications 1 à 7, caractérisé par le fait qu'une résistance (24) à coefficient de température négatif est intégrée au transformateur (2) d'intensité, résistance qui fait partie d'un circuit de courant auxiliaire qui est connecté à deux trajets principaux de courant du disjoncteur à courant de défaut et qu'ainsi, en cas de dépassement de la température supérieure admissible dans le transformateur d'intensité, le disjoncteur à courant de défaut est déclenché par le circuit d'accumulation d'énergie.

9. Disjoncteur à courant de défaut selon la revendications 8, caractérisé par le fait que la connexion du circuit auxiliaire au circuit (3) d'accumulation d'énergie est opérée en parallèle avec les bornes de connexion de l'enroulement secondaire du transformateur (2) d'intensité.

10. Disjoncteur à courant de défaut selon la revendications 8, caractérisé par le fait que la connexion du circuit auxiliaire au circuit (3) d'accumulation d'énergie est opérée par l'intermédiaire d'un circuit redresseur en parallèle avec les bornes du condensateur (12) d'accumulation.
